# EUROPÄISCHE PATENTSCHRIFT

(11) **EP 2 130 764 B1**
(45) Veröffentlichungstag und Bekanntmachung des Hinweises auf die Patenterteilung: **20.11.2013**
(21) Anmeldenummer: 09006195.3
(22) Anmeldetag: 07.05.2009
(51) Int. Cl.: B64C 13/04

(54) **Eingabesystem für eine Landeklappensteuerung eines Flugzeugs**
Input system for flap control of an airplane
Système d'introduction pour une commande de volet d'atterrissage d'un avion

(30) Priorität: 14.05.2008 DE 102008023419; 24.07.2008 DE 102008034444
(43) Veröffentlichungstag der Anmeldung: 09.12.2009
(73) Patentinhaber: Diehl Aerospace GmbH, 88662 Überlingen (DE)
(72) Erfinder: Kummle, Wolfgang, 88682 Salem/Beuren (DE)
(74) Vertreter: Diehl Patentabteilung

(56) Entgegenhaltungen:
- EP-A1- 0 429 939
- US-A- 3 710 644
- US-A- 4 078 449
- US-A- 4 244 541
- US-A- 4 393 730

## Beschreibung

Die Erfindung betrifft ein Eingabesystem für eine Landeklappensteuerung eines Flugzeugs.

Größere Flugzeuge, wie Passagierflugzeuge oder Transportflugzeuge, umfassen an ihren Tragflächen Landeklappen und bewegliche Vorflügel, die zur Veränderung des Flügelprofils hydraulisch bewegt werden können. Bei einem Landeanflug wird das Flügelprofil gekrümmter eingestellt, sodass der Auftrieb erhöht wird und das Flugzeug trotz langsamer Landegeschwindigkeit genug Auftrieb erfährt. Zur Steuerung der Bewegung der Landeklappen ist im Cockpit des Flugzeugs ein Eingabesystem für die Landeklappensteuerung mit einem Wahlhebel vorhanden, über den der Pilot die Landeklappenposition einstellt.

Zum Erfassen der Stellung des Wahlhebels sind solche Eingabesysteme mit einer Sensoranordnung ausgerüstet, die die Hebelstellung erkennt und in entsprechende elektronische Signale umwandelt. Diese werden an einen Rechner weitergeleitet, der die Bewegung der Landeklappen und gegebenenfalls der beweglichen Vorflügel steuert. Zur sensorischen Erfassung des Wahlhebels sind unterschiedliche Verfahren bekannt, beispielsweise die Verwendung eines Potentiometers, eines Hall-Sensors oder einer berührungslos arbeitenden optoelektronischen Einheit, wie sie aus der EP 0 429 939 A1 bekannt ist.

Es ist eine Aufgabe der vorliegenden Erfindung, ein Eingabesystem für eine Landeklappensteuerung eines Flugzeugs anzugeben, die kompakt und leicht ist und in ihrer Funktion zuverlässig arbeitet.

Diese Aufgabe wird durch ein Eingabesystem der eingangs genannten Art gelöst, das erfindungsgemäß einen mittels einer Welleneinheit schwenkbar gelagerten Wahlhebel zur Eingabe einer Landeklappensteuerung und eine an einer Seite des Wahlhebels angeordnete Sensoranordnung mit zwei zueinander redundanten optoelektronischen Sensoreinheiten jeweils zum Erfassen einer Stellung des Wahlhebels umfasst, wobei ein einstückiges Wellenelement der Welleneinheit vom Wahlhebel bis durch die Sensoreinheiten hindurchgeführt ist. Es kann auf eine die Zuverlässigkeit beeinträchtigende Zwischenverbindung eines Wellenelements am Wahlhebel und eines Wellenelements zu den Sensoreinheiten verzichtet werden. Das Hindurchführen der Welleneinheit durch die Sensoreinheiten ist für eine zuverlässige Abtastung der Stellung des Wahlhebels vorteilhaft. Die Welleneinheit kann mehr als das eine Wellenelement umfassen, die fest aneinander fixiert sind und um eine gemeinsame Drehachse drehbar sind.

Durch die Anordnung der aus Redundanzgründen doppelt ausgeführten Sensoreinheiten nur an einer Seite des Wahlhebels kann die Sensoreinheit kompakt ausgeführt sein. Die Sensoreinheiten erfassen jeweils die Stellung des Wahlhebels, z.B. relativ zu einem Gehäuse des Eingabesystems.

Optoelektronische Sensoreinheiten können eine Stellung des Wahlhebels sehr präzise erfassen. Eine Übersetzung der Bewegung des Wahlhebels durch beispielsweise ein Getriebe ist nicht notwendig, so dass ein Verschwenken der Welleneinheit um beispielsweise nur einen kleinen Winkel in gleicher Form auf die Sensorelemente übertragen werden kann, so dass die Sensorelemente, bzw. ein Teil davon, in gleicher Weise bewegt werden, also um den gleichen Winkel verschwenkt werden. In einer vorteilhaften Ausführungsform der Erfindung weist daher jede Sensoreinheit ein Sensorelement auf, die beide an der Welleneinheit befestigt sind zur Übertragung der Bewegung der Welleneinheit in gleicher Form auf die Sensorelemente, wobei die Sensoreinheiten zum Abtasten einer Stellung der Sensorelemente vorgesehen sind. Ist die Welleneinheit starr mit dem Sensorelement bzw. einem Teil davon verbunden, so kann die Bewegung besonders einfach und zuverlässig übertragen werden.

Zweckmäßigerweise umfasst das Eingabesystem ein Bremsmittel zum Bremsen einer Bewegung des Wahlhebels. Einer Kraft eines Piloten zum Bewegen des Wahlhebels kann hierdurch ein Widerstand entgegengesetzt werden zur haptisch guten manuellen Führung des Wahlhebels. Ist das Bremsmittel auf dem Wellenelement angeordnet, so kann es kompakt und mechanisch einfach und zuverlässig ausgeführt werden. Zweckmäßigerweise sind die Sensoreinheiten hierbei zwischen dem Wahlhebel und dem Bremsmittel angeordnet. Bei einem Bruch der Welleneinheit unmittelbar am Bremsmittel kann die Funktion der Sensoreinheiten unbeeinträchtiat bleiben wodurch eine hohe Sicherheit erreicht wird.

Zur Steuerung der Landeklappen kann der Wahlhebel kontinuierlich bewegbar sein. Eine einfachere Steuerung wird durch diskrete und vorgegebene Stellungen des Wahlhebels erreicht, sodass der Wahlhebel von Stellung zu Stellung bewegt wird und Zwischenstellungen unterbunden werden. Die Landeklappen können so auf vordefinierte Positionen gefahren werden, ohne dass der Pilot manuell eine genaue Einstellung vornehmen muss. Zur Herstellung der diskreten Positionen des Wahlhebels umfasst das Eingabesystem vorteilhafterweise ein Konturmittel mit einer Kontur, wobei der Wahlhebel fest mit einem Element verbunden ist, das zu einer Bewegung in der Kontur bei Betätigung des Wahlhebels vorgesehen ist. Das Element ist einerseits fest mit dem Wahlhebel verbunden und andererseits relativ zum Wahlhebel bewegbar. Erreicht das Element beispielsweise eine Ausnehmung in der Kontur, so kann es darin ruhend verbleiben und den Wahlhebel in der damit verbundenen Stellung festhalten. Das Konturmittel ist zweckmäßigerweise eine Konturscheibe mit mehreren Ausnehmungen, die jeweils einer diskreten Position des Wahlhebels zugeordnet sind.

Insbesondere bei einem sehr großen Flugzeug kann es erforderlich sein, dass die Landeklappen und beweglichen Vorflügel für einen Landeanflug ausgefahren sein müssen, um ein zuverlässiges Abbremsen des Flugzeugs zu ermöglichen. Liegt ein Defekt beispielsweise im Konturmittel oder in einer Entriegelung des Wahlhebels vor, sodass dieser nicht in die dafür vorgesehene Stellung bewegt werden kann, kann ein Landen problematisch sein. Zweckmäßigerweise umfasst das Eingabesystem daher ein Sicherheitssystem, mit dem der Wahlhebel auch ohne eine Bewegung des Elements im Konturmittel in die vorgesehene Landestellung gebracht werden kann.

Eine besonders vorteilhafte Realisierung eines solchen Sicherheitssystems wird durch eine Beweglichkeit des Konturmittels erreicht, das hierfür zweckmäßigerweise drehbar auf der Welleneinheit gelagert ist. Der Wahlhebel kann beispielsweise mit einer größeren Kraft die für die Landung vorgesehene Position bewegt werden, wobei nicht das Element im Konturmittel bewegt wird, sondern das gesamte Konturmittel in die dafür vorgesehene Position gebracht wird, beispielsweise durch eine Überrasten.

Wurde das Konturmittel auf der Welleneinheit in einer Notfallsituation mit Hilfe des Sicherheitssystems bewegt, so kann sein weiterer Gebrauch durch die nun andere Stellung des Konturmittels als vorgesehen beeinträchtigt sein. Die Bewegung des Konturmittels auf der Welleneinheit sollte rückgängig gemacht werden, um das Eingabesystem wieder wie ursprünglich voll funktionsfähig zu machen. Bei Flugzeugen, die auch ohne ausgefahrene Landeklappen gelandet werden können, ist ein solches Sicherheitssystem daher nicht notwendig, sodass beispielsweise auf ein Überrasten des Konturmittels verzichtet werden kann. Hierfür umfasst das Eingabesystem vorteilhafterweise ein Gehäuse zur Montage in einem Cockpit und ein mit dem Gehäuse starr verbundenes Blockierelement, das in eine Ausnehmung des Konturmittels eingreift. Die Sicherheitsfunktion kann unterbunden werden und ein langlebiger und zuverlässiger Betrieb des Eingabesystems ohne eine Wartung bedingende Neueinstellung des Konturmittels kann erreicht werden.

Eine Mehrfachverwendung des Konturmittels für einen Einsatz sowohl mit Sicherheitssystem als auch für einen Einsatz ohne Sicherheitssystem kann erreicht werden, wenn die Ausnehmung, in die das Blockierelement eingreift, zwei Teilausnehmungen aufweist, die in Schwenkrichtung des Wahlhebels im Abstand von zwei benachbarten Stellungen des Wahlhebels voneinander entfernt sind, wobei das Blockierelement in eine der Teilausnehmungen eingreift. Bei einem Austausch des Blockierelements gegen ein beispielsweise federgelagertes Element kann dieses von einer Teilausnehmung in die andere Teilausnehmung überrasten und so eine definierte Schwenkbewegung des Konturmittels auf der Welleneinheit erlauben, die eine definierte Position der Landeklappen für einen sicheren Landeanflug herstellt.

Bei einem kleineren Defekt am Eingabesystem ist es vorteilhaft, wenn Teile bereits im Cockpit ausgetauscht werden können, ohne das gesamte Eingabesystem demontieren und durch ein anderes austauschen zu müssen. Zum Austauschen von Teilen ist üblicherweise zunächst eine einem Handgriff des Wahlhebels zugewandte Deckplatte zu lösen, durch die der Wahlhebel hindurchgeführt ist. Die Deckplatte kann einfach vom Wahlhebel entfernt werden, wenn die Deckplatte einen geöffneten Schlitz um eine Bewegungsbahn des Wahlhebels aufweist. Die Deckplatte kann vom fest montierten Wahlhebel entfernt werden, indem der Wahlhebel durch die Öffnung des Schlitzes hindurchgeführt wird.

Weitere Vorteile ergeben sich aus der folgenden Zeichnungsbeschreibung. In der Zeichnung sind Ausführungsbeispiele der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

Es zeigen:
- Fig. 1: eine perspektivische Ansicht eines Eingabesystems mit einem Wahlhebel,
- Fig. 2: das Eingabesystem in einer teilweise geschnittenen Seitendarstellung und
- Fig. 3: einen Bereich einer Konturscheibe in einem Gehäuse des Eingabesystems.

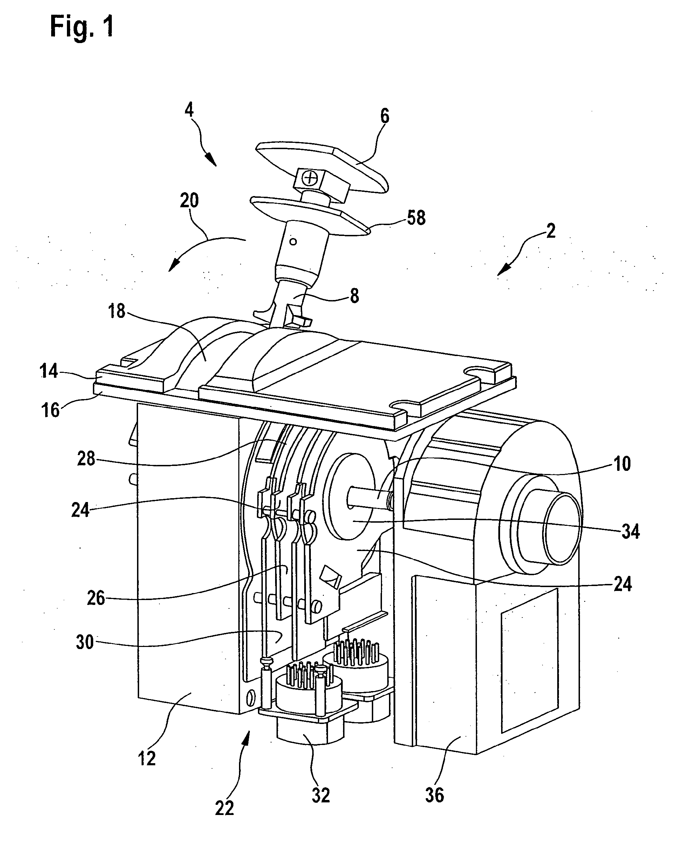

Fig. 1 zeigt ein Eingabesystem 2 für eine Ladeklappensteuerung eines Verkehrsflugzeugs, das einen Wahlhebel 4 mit einem Handgriff 6 an einem Rohr 8 aufweist, das durch eine Welleneinheit 10 schwenkbar in einem Gehäuse 12 gelagert ist. Ein Gehäuseelement 36 des Gehäuses 12 ist in der Art einer Explosionsdarstellung ein Stück weit abgenommen. Das Gehäuse 12 ist nach oben hin mit einer Deckplatte 14 auf einer Sicherheitsplatte 16 ausgestattet, die in einer Cockpitarmatur verschraubt werden, wodurch das gesamte Eingabesystem 2 fest im Cockpit angeordnet ist. Der Wahlhebel 4 kann auf einer Bewegungsbahn durch einen Schlitz 18 in der Deckplatte 14 um die Welleneinheit 10 verschwenkt werden, wie durch einen Pfeil 20 angedeutet ist. Durch das Verschwenken des Wahlhebels 8 werden Landeklappen und bewegliche Vorflügelelemente der Flügel des Flugzeugs in ihre der Stellung des Wahlhebels 4 entsprechenden Stellungen bewegt.

Zur Steuerung der Landeklappen und Vorflügelelemente wird die Stellung des Wahlhebels 4 im Gehäuse 12 durch eine Sensoranordnung 22 abgetastet. Die Sensoranordnung 22 umfasst zwei baugleich ausgeführte Sensoreinheiten 24, die an einer Seite des Wahlhebels 4 nebeneinander und um die Welleneinheit 10 herum angeordnet sind. Die Sensoreinheiten 24 arbeiten optoelektronisch und berührungslos und umfassen jeweils eine flächige Lichtquelle 26, durch die Licht durch Sensorelemente 28 in Form einer Maskierung auf einen Empfänger 30 gestrahlt wird. Die beiden Sensorelemente 28 der Sensoreinheiten 24 sind drehfest mit der Welleneinheit 10 verbunden und werden entsprechend der Bewegung des Wahlhebels 4 innerhalb der Sensoreinheiten 24 verschwenkt. Hierdurch wird auch das Lichtmuster aus der Lichtquelle 26 auf den Empfänger 30 bewegt, der eine Stellung des Lichtmusters registriert und an eine nicht dargestellte Steuereinheit über Schnittstellen 32 weitergibt. Die Steuereinheit wandelt die empfangenen Signale in Steuersignale für die Landeklappen und beweglichen Vorflügelelemente um.

Ebenfalls auf der Welleneinheit 10 ist ein Bremsmittel 34 gelagert, das einer Bewegung der Welleneinheit 10 relativ zum Gehäuse 12 eine Kraft entgegenstellt. Hierzu ist das Bremsmittel 34 federnd mit dem Gehäuseelement 36 verbunden, sodass zwischen dem Bremsmittel 34 und dem Gehäuseelement 36 - oder einem dazwischen gelagerten Element - eine reibende Bewegung bei einer Bewegung des Wahlhebels 4 erzeugt wird. Durch die Reibungskraft erfährt ein den Wahlhebel 4 bedienender Pilot einen mechanischen Widerstand beim Bewegen des Wahlhebels 4, der ein Führen des Wahlhebels 4 angenehm macht.

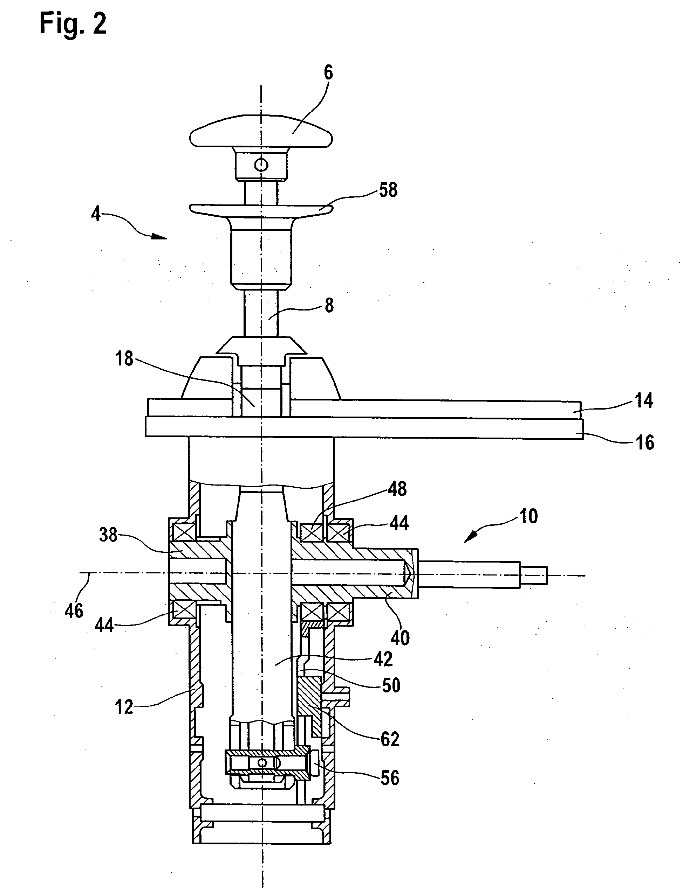

Figur 2 zeigt das Eingabesystem 2 in einer Seitendarstellung, wobei das Gehäuse 12 in seinem unteren Bereich teilgeschnitten dargestellt ist. Zu sehen ist die geschnitten gezeigte Welleneinheit 10, die zwei Wellenelemente 38, 40 umfasst, die an einer Verlängerung 42 des Rohrs 8 verschraubt sind. Mit Hilfe von zwei Lagern 44 ist die Welleneinheit 10 drehbar im Gehäuse 12 gelagert, sodass der Wahlhebel 4 um eine Drehachse 46 schwenkbar beweglich ist. Ein Abschnitt größeren Durchmessers des Wellenelements 40 ist durch die Sensoreinheiten 24 hindurchgeführt und ein Abschnitt kleineren Durchmessers des Wellenelements 40 trägt das Bremsmittel 34.

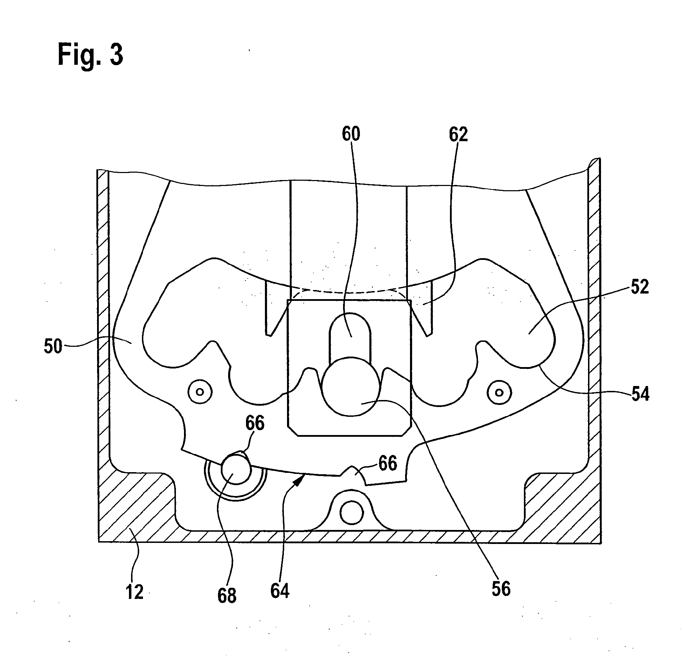

Mittels eines weiteren Lagers 48 ist ein Konturmittel 50 in Form einer Konturscheibe ebenfalls auf der Welleneinheit 10 drehbar gelagert. Das Konturmittel 50 ist in Figur 3 ausschnittsweise von der Seite dargestellt, sodass eine fünf Ausnehmungen 52 umfassende Kontur 54 sichtbar ist, die ein geschlossenes Loch in der Konturscheibe umfährt. In einer der Ausnehmungen 52 ist ein mit dem Wahlhebel 4 fest verbundenes Element 56 in Form eines Bolzens gelagert, das den Wahlhebel 4 bei der in Figur 3 gezeigten Position in einer Mittelstellung hält. Durch ein nicht dargestelltes Federelement wird das Element 56 in die Ausnehmungen 52 hineingedrückt.

Mithilfe einer Entriegelung 58 des Handgriffs 6 kann das Element 56 in einem Langloch 60 eines in Figur 3 hinter der Konturscheibe angeordneten Führungsmittels nach oben und somit aus der Ausnehmung 52 gezogen werden, sodass der Wahlhebel 4 in eine benachbarte Stellung geführt und das Element 56 in die entsprechende Ausnehmung 52 abgesenkt werden kann, sodass der Wahlhebel 4 in dieser Stellung fest verbleibt. Über den Ausnehmungen 52 angeordnete Begrenzer 62 verhindern, dass das Element 56 und damit der Wahlhebel 4 in einer durchgehenden Bewegung von seiner mittleren Position in eine äußere Position oder umgekehrt bewegt werden kann, ohne dass das Element 56 in eine dazwischen liegende Ausnehmung 52 eingebracht wird. Hierdurch kann ein Übersteuern der Landeklappen vermieden werden.

Auf seiner Unterseite ist das Konturmittel 50 mit einer länglichen Ausnehmung 64 versehen, die an ihren beiden äußeren Rändern jeweils eine noch tiefere Teilausnehmung 66 umfasst. In einer dieser Teilausnehmungen 66 ist ein Blockierelement 68 eingefügt, das einen starr im Gehäuse 12 gelagerten Bolzen umfasst, der in die Ausnehmung 66 eingreift. Hierdurch wird auch das Konturmittel 50, das an sich drehbar auf der Welleneinheit 10 gelagert ist, starr innerhalb des Gehäuses 12 befestigt.

Bei großen Flugzeugen kann es notwendig sein, dass die Landeklappen und Vorflügel bei einem Landeanflug ausgefahren sein müssen, und der Wahlhebel 4 in einer zweitäußersten Position eingeschwenkt sein muss. Ist der Wahlhebel 4 bei einem Flug in einer äußersten Position eingeschwenkt und die Landeklappen und Vorflügelelemente eingefahren und der Wahlhebel 4 oder das Element 56 oder ein anderes für die Bewegung des Wahlhebels 4 notwendiges Element defekt, so ist unter Umständen das Bringen des Wahlhebels 4 von der äußersten in die zweitäußerste Stellung nicht möglich. Ein Landeanflug kann nicht durchgeführt werden und das Flugzeug wird in eine Gefahr gebracht.

Um dennoch die Landeklappen und die beweglichen Vorflügelelemente ausfahren zu können ohne eine Bewegung des Elements 56 in der Kontur 54, müsste die gesamte Kontur 54 und mit ihr das Konturmittel 50 auf der Welleneinheit 10 verschwenkt werden. Diese Bewegung kann erlaubt werden, wenn das Gehäuse 12 etwas größer ist und ein Sicherheitssystem umfasst, durch das das Blockiermittel 68 nicht starr im Gehäuse gelagert ist, sondern federgelagert in die Teilausnehmung 66 eingedrückt wird. Bei einem Aufbringen einer entsprechend großen Kraft auf den Wahlhebel 4 kann das Konturmittel 50 so stark gegen das Blockierelement 68 gedrückt werden, dass dieses entgegen der Federkraft aus der Teilausnehmung 66 ausrastet und das Konturmittel 50 bei einer Sicht wie aus Figur 3 nach links verschwenkt wird. Durch dieses Übersteuern des Wahlhebels 4 rastet das Blockierelement 68 in der anderen Teilausnehmung 66 ein, sodass der Wahlhebel 4 weiterbewegt wird. Durch diese Weiterbewegung wird auch die Welleneinheit 10 und damit die Maskierung 28 verschwenkt, sodass ein Signal zum Ausfahren der Landeklappen und Bewegen der Vorflügelelemente über die Schnittstelle 32 an die Steuereinheit gesendet wird.

Die Teilausnehmungen 66 sind in Schwenkrichtung des Wahlhebels 4 bzw. Konturmittels 50 im Abstand von zwei benachbarten diskreten Stellungen, also Ausnehmungen 52, voneinander entfernt angeordnet. Hierdurch wird der Wahlhebel 4 bei einem Übersteuern um genau eine Position beziehungsweise Ausnehmung 52 weiterbewegt.

Durch das Vorsehen der zwei Teilausnehmungen 66 kann das Konturmittel 50 und damit die gesamte Mechanik des Eingabesystems 2 - außer dem Blockierelement 68 - sowohl mit einem Sicherheitssystem für eine Übersteuerung als auch ohne Sicherheitssystem verwendet werden.

### Bezugszeichenliste

- 2: Eingabesystem
- 4: Wahlhebel
- 6: Handgriff
- 8: Rohr
- 10: Welleneinheit
- 12: Gehäuse
- 14: Deckplatte
- 16: Sicherheitsplatte
- 18: Schlitz
- 20: Pfeil
- 22: Sensoranordnung
- 24: Sensoreinheit
- 26: Lichtquelle
- 28: Maskierung
- 30: Empfänger
- 32: Schnittstelle
- 34: Bremsmittel
- 36: Gehäuseelement
- 38: Wellenelement
- 40: Wellenelement
- 42: Verlängerung
- 44: Lager
- 46: Drehachse
- 48: Lager
- 50: Konturmittel
- 52: Ausnehmung
- 54: Kontur
- 56: Element
- 58: Entriegelung
- 60: Langloch
- 62: Begrenzer
- 64: Ausnehmung
- 66: Teilausnehmung
- 68: Blockierelement

## Patentansprüche

1. Eingabesystem (2) für eine Landeklappensteuerung eines Flugzeugs mit einem mittels einer Welleneinheit (10) schwenkbar gelagerten Wahlhebel (4) zur Eingabe einer Landeklappenstellung und einer an einer Seite des Wahlhebels (4) angeordneten Sensoranordnung (22) mit zwei zueinander redundanten optoelektronischen Sensoreinheiten (24) jeweils zum Erfassen einer Stellung des Wahlhebels (4), wobei ein einstückiges Wellenelement (40) der Welleneinheit (10) vom Wahlhebel (4) bis durch die Sensoreinheiten (24) hindurchgeführt ist.

2. Eingabesystem (2) nach Anspruch 1,
**dadurch gekennzeichnet,**
**dass** jede Sensoreinheit (24) ein Sensorelement (28) aufweist, wobei beide Sensorelemente (28) an dem Wellenelement (40) befestigt sind zur Übertragung der Bewegung des Wellenelements (10) in gleicher Form auf die Sensorelemente (28), und die Sensoreinheiten (24) zum Abtasten einer Stellung der Sensorelemente (28) vorgesehen sind.

3. Eingabesystem (2) nach Anspruch 1 oder 2,
**dadurch gekennzeichnet,**
**dass** das Wellenelements (40) ein Bremsmittel (34) zum Bremsen einer Bewegung des Wahlhebels (4) trägt.

4. Eingabesystem (2) nach Anspruch 3,
**dadurch gekennzeichnet,**
**dass** die Sensoreinheiten (24) zwischen dem Wahlhebel (4) und dem Bremsmittel (34) angeordnet sind.

5. Eingabesystem (2) nach einem der vorhergehenden Ansprüche, **gekennzeichnet,**
**durch** ein Konturmittel (50) mit einer Kontur (54) und ein mit dem Wahlhebel (4) einerseits fest verbundenes und andererseits relativ zum Wahlhebel (4) bewegbares Element (56), das zu einer Bewegung in der Kontur (54) bei Betätigung des Wahlhebels (4) vorgesehen ist.

6. Eingabesystem (2) nach Anspruch 5,
**dadurch gekennzeichnet,**
**dass** das Konturmittel (50) in einem eine Drehung des Konturmittels (50) auf der Welleneinheit (10) erlaubenden Lager (48) auf der Welleneinheit (10) gelagert ist.

7. Eingabesystem (2) nach Anspruch 5 oder 6,
**gekennzeichnet,**
**durch** ein Gehäuse (12) zur Montage in einem Cockpit und ein mit dem Gehäuse (12) starr verbundenes Blockierelement (68), das in eine Ausnehmung (64) des Konturmittels (50) eingreift.

8. Eingabesystem (2) nach Anspruch 7,
**dadurch gekennzeichnet,**
**dass** die Ausnehmung (64) zwei Teilausnehmungen (66) aufweist, die in Schwenkrichtung des Wahlhebels (4) im Abstand von zwei benachbarten diskreten Stellungen des Wahlhebels (4) voneinander entfernt sind, wobei das Blockierelement (68) in eine der Teilausnehmungen (66) eingreift.

9. Eingabesystem (2) nach einem der vorhergehenden Ansprüche,
**gekennzeichnet**
**durch** eine einem Handgriff (6) des Wahlhebels (4) zugewandte Deckplatte (14) mit einem geöffneten Schlitz (18) um eine Bewegungsbahn des Wahlhebels (4).

## Claims

1. Input system (2) for a flap control of an airplane, having a selection lever (4), which is mounted so as to be able to pivot by means of a shaft unit (10), for inputting a landing flap position and a sensor array (22) arranged on one side of the selection lever (4) and having two optoelectronic sensor units (24), which are redundant with respect to each other, in each case for sensing a position of the selection lever (4), wherein a one-piece shaft element (40) of the shaft unit (10) is led from the selection lever (4) to pass through the sensor units (24).

2. Input system (2) according to Claim 1,
**characterized in that**
each sensor unit (24) has a sensor element (28), wherein both sensor elements (28) are secured to the shaft element (40) in order that the movement of the shaft element (40) is transmitted in the same form to the sensor elements (28), and the sensor units (24) are provided in order to detect a position of the sensor elements (28).

3. Input system (2) according to Claim 1 or 2,
**characterized in that**
the shaft element (40) bears a braking means (34) for braking a movement of the selection lever (4).

4. Input system (2) according to Claim 3,
**characterized in that**
the sensor units (24) are arranged between the selection lever (4) and the braking means (34).

5. Input system (2) according to one of the preceding claims,
**characterized by**
a contour means (50) having a contour (54) and an element (56) which on one hand is securely attached to the selection lever (4) and on the other can be moved relative to the selection lever (4), and which is provided so as to be moved in the contour (54) when the selection lever (4) is actuated.

6. Input system (2) according to Claim 5,
**characterized in that**
the contour means (50) is mounted on the shaft unit (10) in a bearing (48) which allows the contour means (50) to rotate on the shaft unit (10).

7. Input system (2) according to Claim 5 or 6,
**characterized by**
a housing (12) for mounting in a cockpit and a blocking element (68) which is rigidly attached to the housing (12) and engages in a recess (64) of the contour means (50).

8. Input system (2) according to Claim 7,
**characterized in that**
the recess (64) has two partial recesses (66) which are separated from each other in the pivoting direction of the selection lever (4) by the same distance as two adjacent, discrete positions of the selection lever (4), wherein the blocking element (68) engages in one of the partial recesses (66).

9. Input system (2) according to one of the preceding claims,
**characterized by**
a cover plate (14) which faces a handle (6) of the selection lever (4) and has an open slot (18) over a movement path of the selection lever (4).

## Revendications

1. Système d'introduction (2) pour commande de volet d'atterrissage d'un aéronef, le système présentant
un levier de sélection (4) monté à pivotement au moyen d'une unité d'arbre (10) et servant à introduire une position des volets d'atterrissage
et un ensemble de détection (22) disposé sur un côté du levier de sélection (4) et présentant deux unités optoélectroniques de détection (24) redondantes l'une par rapport à l'autre et servant chacune à saisir une position du levier de sélection (4),
un élément d'arbre (40) d'un seul tenant de l'unité d'arbre (10) prolongeant le levier de sélection (4) jusqu'à venir entre les unités de détection (24).

2. Système d'introduction (2) selon la revendication 1, **caractérisé en ce que** chaque unité de détection (24) présente un élément de détection (28), les deux éléments de détection (28) étant fixés sur l'élément d'arbre (40) pour transmettre le déplacement de l'élément d'arbre (40) sous la même forme aux éléments de détection (28), les unités de détection (24) étant prévues pour détecter la position des éléments de détection (28).

3. Système d'introduction (2) selon les revendications 1 ou 2, **caractérisé en ce que** l'élément d'arbre (40) porte un moyen de freinage (34) qui freine le déplacement du levier de sélection (4).

4. Système d'introduction (2) selon la revendication 3, **caractérisé en ce que** les unités de détection (24) sont disposées entre le levier de sélection (4) et le moyen de freinage (34).

5. Système d'introduction (2) selon l'une des revendications précédentes, **caractérisé en ce qu'**un moyen (50) à contour doté d'un contour (54) et **en ce qu'**un élément (56) d'une part relié solidairement au levier de sélection (4) et d'autre part apte à se déplacer par rapport au levier de sélection (4) est prévu pour se déplacer dans le contour (54) lorsque le levier de sélection (4) est actionné.

6. Système d'introduction (2) selon la revendication 5, **caractérisé en ce que** le moyen (50) à contour est monté sur l'unité d'arbre (10) par un palier (48) qui permet une rotation du moyen (50) à contour sur l'unité d'arbre (10).

7. Système d'introduction (2) selon les revendications 5 ou 6, **caractérisé par** un boîtier (12) de montage dans un cockpit et par un élément de blocage (68) relié solidairement au boîtier (12) et s'engageant dans une découpe (64) du moyen (50) à contour.

8. Système d'introduction (2) selon la revendication 7, **caractérisé en ce que** la découpe (64) présente deux parties (66) de contour situées à distance mutuelle dans la direction de pivotement du levier de sélection (4) et à distance de deux positions distinctes voisines du levier de sélection (4), l'élément de blocage (68) s'engageant dans l'une des parties (66) du contour.

9. Système d'introduction (2) selon l'une des revendications précédentes, **caractérisé par** une plaque de recouvrement (14) tournée vers une poignée (6) du levier de sélection (4) et dotée d'une fente ouverte (18) autour d'une piste de déplacement du levier de sélection (4).
